# EUROPEAN PATENT SPECIFICATION

(11) **EP 2 295 180 B1**
(45) Date of publication and mention of the grant of the patent: **27.02.2019**
(21) Application number: 10167963.7
(22) Date of filing: 30.06.2010
(51) Int. Cl.: B23H 7/06

(54) **Wire electric discharge machining method, apparatus therefor, wire electric discharge machining program creating device, and computer-readable recording medium in which program for creating wire electric discharge machining program is stored**
Elektrisches Drahterodierverfahren, Vorrichtung dafür, Vorrichtung zur Erzeugung des Drahterodierprogramms und computerlesbares Aufzeichnungsmedium mit darauf gespeichertem Programm zur Erzeugung des Drahterodierprogramms
Procédé d'usinage à décharge électrique, appareil correspondant, dispositif de création de programme d'usinage à décharge électrique, et support d'enregistrement lisible sur ordinateur dans lequel un programme de création du programme d'usinage à décharge électrique est stocké

(30) Priority: 11.09.2009 JP 2009210361
(43) Date of publication of application: 16.03.2011
(73) Proprietor: FANUC CORPORATION, Oshino-mura Minamitsuru-gun Yamanashi 401-0597 (JP)
(72) Inventor: Suzuki, Koji, Minamitsuru-gun Yamanashi 401-0597 (JP); Arakawa, Yasuo, Minamitsuru-gun Yamanashi 401-0597 (JP); Takagi, Shigetoshi, Minamitsuru-gun Yamanashi 401-0597 (JP)
(74) Representative: Haseltine Lake LLP

(56) References cited:
- EP-A1- 2 213 400
- CH-A- 528 328
- DE-A1- 4 222 186
- JP-A- 55 112 726
- JP-A- 56 157 925

## Description

### BACKGROUND OF THE INVENTION

### Field of the Invention

The present invention relates to a wire electric discharge machining method, a wire electric discharge machining apparatus, a wire electric discharge machining program creating device, and a computer-readable recording medium in which a program for creating a wire electric discharge machining program is stored.

### Description of the Related Art

A wire electric discharge machine performs electric discharge machining in such a manner that a wire electrode is extended between two wire guides and a voltage is applied to a gap between the wire electrode and a workpiece located between the wire guides.

If the size of the gap between the wire electrode and the workpiece becomes smaller than a predetermined value, electric discharge occurs more easily, that is, the frequency of electric discharge increases, so that the voltage in the gap between the workpiece and the wire electrode is reduced, and the wire electrode returns from the workpiece side toward its original position. As this movement occurs repeatedly, a machined surface fails to have a desired flat shape and inevitably assumes an undulating shape. Japanese Patent Application Laid-Open No. 11-170118 discloses a technique in which the voltage in the electrode-workpiece gap is detected in the wire electric discharge machine, and the wire electrode is relatively moved at right angles to a machining path in accordance with the detected voltage, in order to prevent undulation of the machined surface.

In wire electric discharge machining, on the other hand, a phenomenon occurs that the workpiece tends to be machined with the central portion dented, thus worsening the machining accuracy, even at the stage of finish work. Japanese Patent Application Laid-Open No. 5-8122 discloses a technique in which the machining speed is controlled so that a constant voltage in a gap between an electrode and a workpiece can be detected in the wire electric discharge machine, in order to prevent an occurrence of indentation formed by machining the workpiece.

In the wire electric discharge machining, moreover, a workpiece with a stepped external shape may sometimes be cut along a stepped cross section. In such a case, the shape of a stepped part suddenly changes, and machining conditions also change. Thus, the conventional wire electric discharge machine has a problem that it cannot perform uniform stable machining and that streaky machining flaws are formed on the machined surface of the workpiece. Japanese Patent Application Laid-Open No. 10-328938 discloses a technique in which the wire electrode is tilted to overcome machining flaws that may be produced in a stepped portion of a workpiece.

According to the conventional wire electric discharge machine, a phenomenon occurs that the width of machined grooves with which the workpiece are cut by the wire electrode is greater at the central part of the workpiece with respect to its thickness than at the upper and lower end faces of the workpiece. Thus, the workpiece is machined with the central portion dented, so that the machining accuracy is reduced. If the workpiece has a great thickness, in particular, the wire electrode vibrates so much, with result that the workpiece is machined with the central portion dented conspicuously.

FIG. 9 is a diagram showing how a workpiece 3 is electro-discharge machined in an X-axis direction by a wire electrode 4 of a wire electric discharge machine. In a machining position 16, the wire electrode behaves in the manner shown in FIG. 10 or 11.

FIG. 10 is a diagram illustrating how the wire electrode 4 is swung right and left relative to its running direction (X-axis direction perpendicular to both Y- and Z-axis directions) relative to the workpiece.

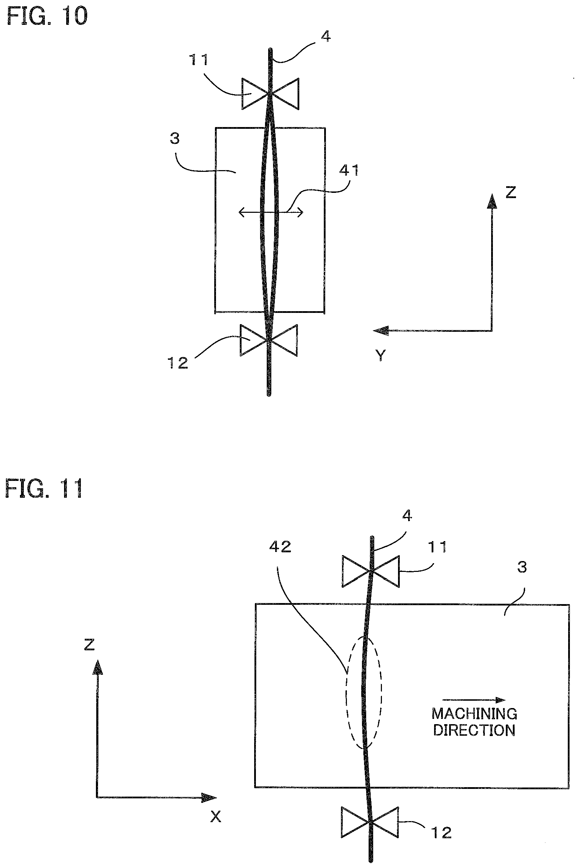

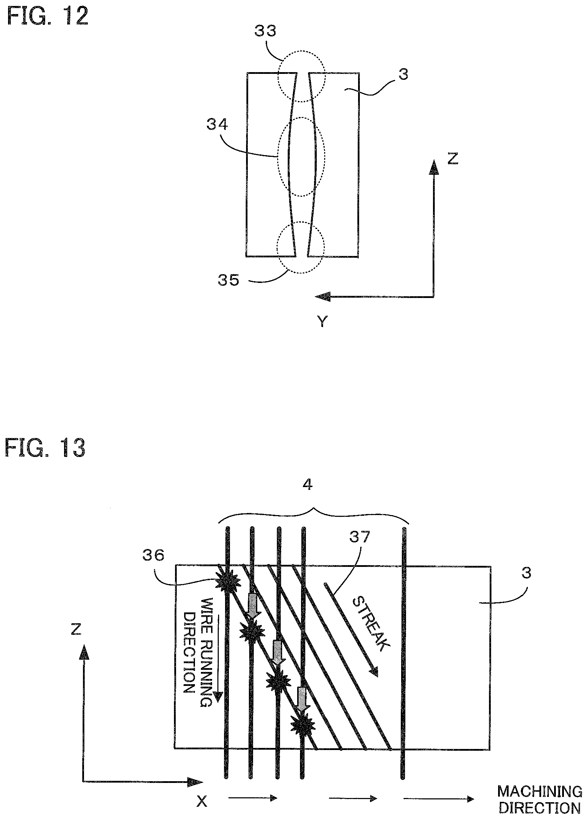

The wire electrode 4 vibrates in a right-left direction 41 relative to its running direction with upper and lower wire guides 11 and 12 serving as nodes so that it forms a belly at the center of the workpiece 3. At the same time, the central part (indicated by a broken-line ellipse 42) of the wire electrode 4 bends backward relative to a machining direction of the workpiece 3, as shown in FIG. 11. Thus, the wire electrode 4 bends backward (see reference numeral 42 in FIG. 11) relative to the running direction as the workpiece 3 is machined, and at the same time, vibrates right and left (see reference numeral 41 FIG. 10). Since the amplitude is high at the central part of the workpiece 3 with respect to its thickness in the machining by the wire electrode 4, in particular, the workpiece is inevitably machined into the shape shown in FIG. 12.

FIG. 12 is a diagram illustrating how a workpiece is machined having an indentation in the central part thereof with respect to its thickness.

If strong electric discharge occurs at a single point on the wire electrode 4 opposed to the workpiece 3 during finish machining with low electric discharge energy, moreover, the discharge point moves from top to bottom of the workpiece 3 depending on the running state of the wire electrode 4.

FIG. 13 is a diagram illustrating how machining streaks are produced during the finish machining with low electric discharge energy. In the state shown in FIG. 13, the wire electrode 4 is moving from left to right relative to the workpiece 3.

A discharge point 36 moves downward relative to the workpiece 3 as the wire electrode 4 moves. Thereupon, streaks 37 that are inclined with respect to the running direction of the wire electrode 4 are formed on the machined surface of the workpiece 3. If the running speed and machining speed of the wire electrode 4 are fixed, the fine slant streaks 37 are produced substantially uniformly on the machined surface of the workpiece 3. Electric discharge grooves as the streaks 37 are fine grooves about 0.2 to 1.0 µm deep. In FIG. 13, the streaks 37 are shown as being considerably inclined with respect to the direction perpendicular to the running direction, for ease of understanding. On an actual machined surface, however, the streaks 37 extend almost perpendicular to the running direction.

CH-A-528 328 discloses a device for electro-erosive conical cutting of workpiece contours with a path-controlled wire electrode.

JP-A-55 112726 discloses an electric discharge processing device for wire cutting.

JP-A-56 157925 discloses a wire cut electric discharge machining device.

EP-A1-2213400, citable under Article 54(3) EPC only, discloses a method for controlling a wire electric discharge machining process, and to a wire electric discharge machining apparatus. DE-A1-4222186 discloses a method of precision electric-discharge machining employing electrodes in the form of wires, and apparatus for carrying out the method. Both documents consider inclining the wire electrode in the cutting direction.

JP-S62-114828 discloses a wire-cut electrical discharge machining method and device. A machining electrode is fed towards a discharge machining face (cutting face) while vibratingly varying the angle between the extension direction of the machining electrode and the discharge machining face.

JP-A-2009-233842 discloses a wire electric discharge machining method, which oscillation-machines a workpiece with respect to a machining advancement direction into a predetermined machining shape which is decided beforehand, by oscillation-advancing a wire electrode or the workpiece obliquely to the machining advancement direction by a predetermined width.

### SUMMARY OF THE INVENTION

The object of the present invention is to provide a wire electric discharge machining method, in which a machining amount for producing an indentation on the workpiece can be reduced, a wire electric discharge machine for carrying out the method, a machining program creating device configured to create a machining program for carrying out the wire electric discharge machining method, and a computer-readable recording medium in which a program for creating the machining program is stored.

The present invention is defined by the independent claims, to which reference should now be made. Specific embodiments are set out in the dependent claims.

### BRIEF DESCRIPTION OF THE DRAWINGS

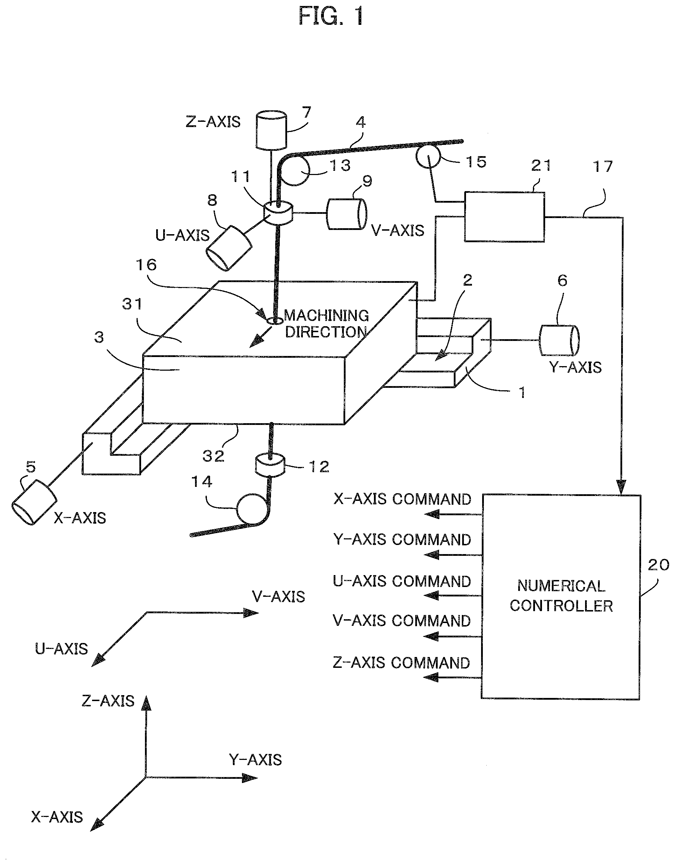

FIG. 1 is a diagram illustrating the outline and operation of a wire electric discharge machine according to the present invention;

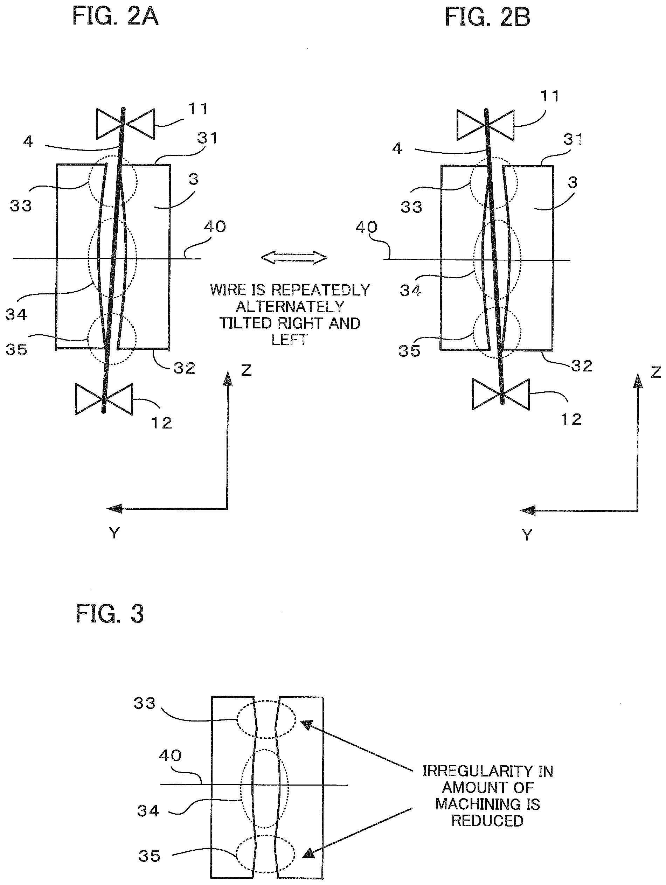

FIGS. 2A and 2B are diagrams illustrating how a wire electrode is continuously alternately tilted right (FIG. 2A) and left (FIG. 2B) relative to a machining direction of a workpiece as the workpiece is machined;
FIG. 3 is a diagram illustrating how irregularity in the amount of machining is reduced and a machining amount for producing an indentation on the workpiece is also reduced by alternately swinging the wire electrode right and left relative to the machining direction of the workpiece as the workpiece is machined;

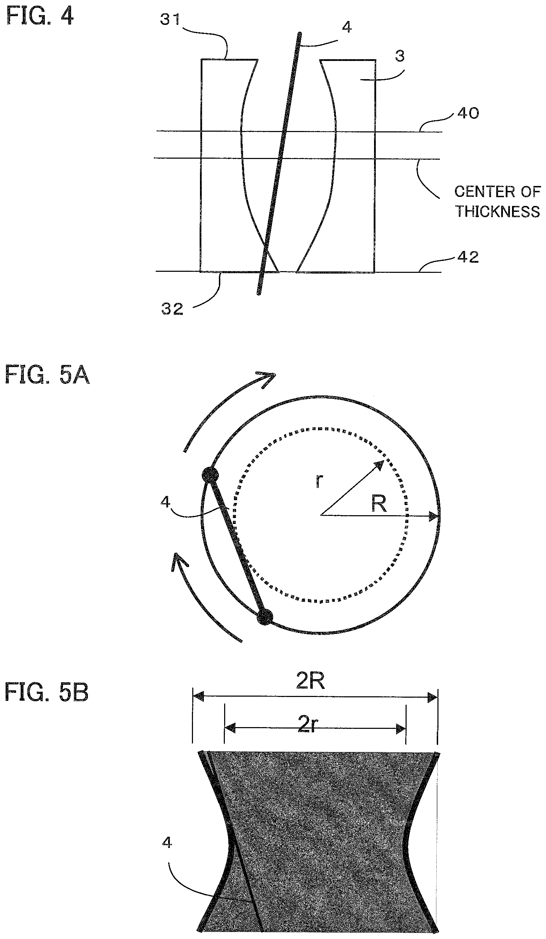

FIG. 4 shows an example in which a program plane may be set in a position (not always coincident with the central part of the workpiece with respect to the thickness) where an indentation is produced conspicuously by machining;
FIGS. 5A and 5B are diagrams illustrating how a helical gear is machined by wire electric discharge machining;

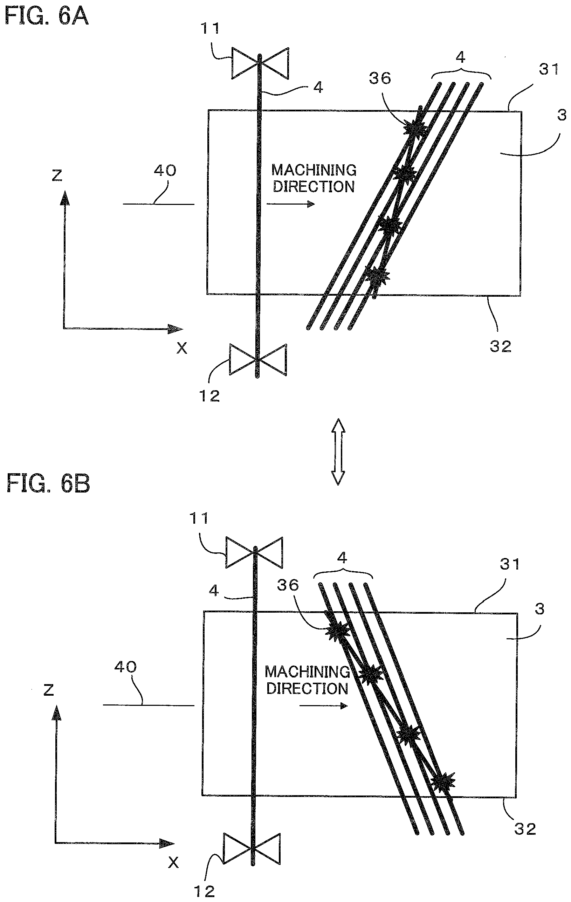

FIGS. 6A and 6B are diagrams illustrating how the wire electrode is continuously alternately tilted forward (FIG. 6A) and backward (FIG. 6B) relative to the machining direction of the workpiece as the workpiece is machined, which may be useful for the reader;

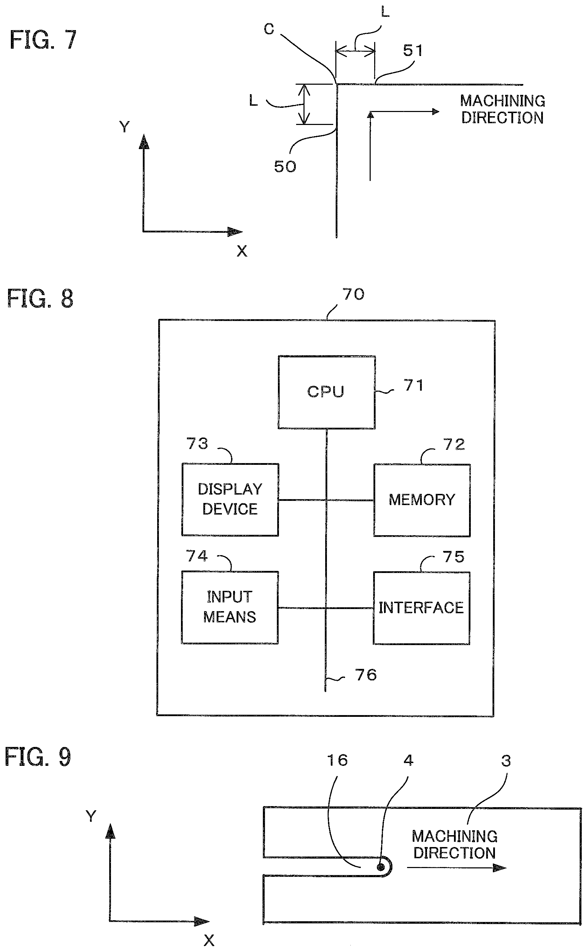

FIG. 7 is a diagram illustrating how corner portions of the workpiece are machined without alternately tilting the wire electrode right and left or forward and backward relative to the machining direction of the workpiece in intervals for a predetermined distance;
FIG. 8 is a schematic block diagram showing one embodiment of a wire electric discharge machining program creating device according to the present invention;
FIG. 9 is a diagram showing how a workpiece is electro-discharge machined in an X-axis direction by a wire electrode of a wire electric discharge machine;
FIG. 10 is a diagram illustrating how the wire electrode is swung right and left relative to its running direction (X-axis direction perpendicular to both Y- and Z-axis directions) relative to the workpiece;
FIG. 11 is a diagram illustrating how the wire electrode bends backward relative to the machining direction of the workpiece;
FIG. 12 is a diagram illustrating how an indentation is produced on a workpiece in the central part thereof with respect to its thickness, by vibration of the wire electrode; and
FIG. 13 is a diagram illustrating how machining streaks are produced during finish machining with low electric discharge energy.

### DETAILED DESCRIPTION OF THE PREFERRED EMBODIMENTS

FIG. 1 is a diagram illustrating the outline and operation of a wire electric discharge machine according to the present invention. The outline of the wire electric discharge machine shown in FIG. 1 resembles that of the conventional one. Reference numeral 1 denotes a workpiece table on which a workpiece 3 as an object to be machined is set and fixed. The workpiece table 1 has a mounting surface 2 with high-precision flatness. During wire electric discharge machining, the workpiece 3 is set and fixed on the workpiece table 1 so that its bottom surface contacts the mounting surface 2.

In order to subject the workpiece 3 to electric discharge machining, a wire electrode 4 is fed from a wire electrode supply reel (not shown) to a machining position 16 via a power feed roller 15, upper guide roller 13, and upper wire guide 11. During the wire electric discharge machining, the wire electrode 4 is extended between the upper wire guide 11 and a lower wire guide 12 by wire connecting operation. Then, a voltage to cause electric discharge is applied to a gap between the wire electrode 4 and the workpiece 3.

The wire electrode 4 is passed through the machining position 16 on the workpiece 3, the lower wire guide 12, and a lower guide roller 14 and wound up on a take-up reel (not shown), which pulls the wire electrode 4 with a predetermined tension. The used wire electrode 4 may be recovered in a wire collection box (not shown) instead of being wound up on the take-up reel.

Electrical energy for the electric discharge machining is supplied from an electric discharge machining power source 21 through the power feed roller 15. Further, cooling water may be poured onto the machining position 16 or the entire workpiece 3 may be dipped in a working fluid (e.g., pure water).

Normally, the mounting surface 2 of the workpiece table 1 extends in a horizontal direction (on a plane parallel to an XY-plane). The workpiece table 1 can be driven on a plane parallel to the XY-plane by an X-axis servomotor 5 and a Y-axis servomotor 6. Further, the upper wire guide 11 can be driven on a plane parallel to the XY-plane by a U-axis servomotor 8 and a V-axis servomotor 9, and in addition, driven in a direction perpendicular to the XY-plane by a Z-axis servomotor 7. Normally, a movement direction based on a U-axis is parallel to that based on an X-axis, while a movement direction based on a V-axis is parallel to that based on a Y-axis.

The machining position 16 can be changed by changing the position of the wire electrode 4 relative to the workpiece 3 based on commands (X-, Y-, U-, V-, and Z-axis commands) to the respective servomotors output from a numerical controller 20. The contents of the commands are normally prescribed by a machining program. The machining program is a program that determines move commands to the wire electrode 4, that is, move commands to the respective servomotors, etc., and is defined by the plane parallel to the XY-plane. This defined plane can be set in an arbitrary position relative to the Z-axis. This arbitrarily settable plane will be referred to as a "program plane".

The following is a description of a wire electric discharge machining method capable of reducing a machining amount for producing an indentation on the workpiece. Let us suppose that the workpiece 3 is machined in a "machining direction" shown in FIG. 1. In order to reduce a machining amount for producing an indentation on the workpiece, the wire electrode 4 is continuously alternately tilted right and left relative to the machining direction of the workpiece 3 as the workpiece 3 is machined, as shown in FIGS. 2A and 2B. In this example, a program plane 40 is set in the central part of the workpiece 3 with respect to its thickness.

FIG. 2A shows a state in which the upper wire guide 11 is moved relative to a workpiece upper surface 31 to the right of the drawing plane and the lower wire guide 12 is moved relative to a workpiece lower surface 32 to the left of the drawing plane, whereby the wire electrode 4 is tilted rightward (or clockwise) relative to the machining direction.

On the other hand, FIG. 2B shows a state in which the upper wire guide 11 is moved relative to the workpiece upper surface 31 to the left of the drawing plane and the lower wire guide 12 is moved relative to the workpiece lower surface 32 to the right of the drawing plane, whereby the wire electrode 4 is tilted leftward (or counterclockwise) relative to the machining direction.

Then, electric discharge machining of the workpiece 3 is executed by continuously alternately tilting the wire electrode 4 between the states shown in FIGS. 2A and 2B relative to the machining direction. Thus, upper and lower parts 33 and 35 of the workpiece 3, as well as a central part 34, can be electro-discharge machined by means of the wire electrode 4.

Instead of tilting the wire electrode 4 by moving the upper and lower wire guides 11 and 12, according to the wire electric discharge machine shown in FIG. 1, the X-axis servomotor 5 may be driven to move the workpiece table 1 in accordance with the machining program so that the wire electrode 4 moves relative to the workpiece 3 in the illustrated machining direction. Further, the V- and Y-axis servomotors 9 and 6 may be individually driven to tilt the wire electrode 4 right and left relative to the machining direction.

The degree to which the wire electrode 4 is tilted relative to the workpiece 3 can be set in accordance with the machining program based on the height of the workpiece upper surface 31 above the program plane 40.

FIG. 3 is a diagram illustrating how irregularity in the amount of machining of a workpiece is reduced and a machining amount for producing an indentation on the workpiece is also reduced by alternately swinging the wire electrode 4 right and left relative to the machining direction of the workpiece 3 as the workpiece 3 is machined.

By tilting the wire electrode 4, the upper and lower parts 33 and 35 of the workpiece 3 are electro-discharge machined so that the amounts of machining at the upper, central, and lower parts 33, 34 and 35 are substantially equal, whereby a machining amount for producing an indentation on the workpiece is reduced, as shown in FIG. 3.

The following is a description of an example of the machining program by which the wire electrode 4 shown in FIGS. 2A and 2B is alternately tilted right and left as the workpiece 3 is machined.
G01X10.
X10.01 V0.1
X10.02 V-0.1
X10.03 V0.1
X10.04 V-0.1

In the above program example:
The first line indicates that the current position of the wire electrode 4 moves to a position X10-mm. G01 represents a linear interpolation command.

The second line indicates that the wire electrode 4 is moved to a position X10.01-mm as its upper side is positively displaced 0.1 mm relative to the Y-axis.

The third line indicates that the wire electrode 4 is moved to a position X10.02-mm as its upper side is negatively displaced 0.1 mm relative to the Y-axis.

The fourth line indicates that the wire electrode 4 is moved to a position X10.03-mm as its upper side is positively displaced 0.1 mm relative to the Y-axis.

The fifth line indicates that the wire electrode 4 is moved to a position X10.04-mm as its upper side is negatively displaced 0.1 mm relative to the Y-axis.

In the machining program example described above, reference symbol X denotes a commanded central position on a workpiece 3 with respect to the thickness thereof, as the program plane. Reference symbol V denotes an amount of tilt as an amount of deviation on an auxiliary plane. In this case, V denotes a commanded amount of tilt of the wire electrode 4 on the workpiece upper surface 31, the top part of the workpiece 3 with respect to the thickness thereof. In a wire electric discharge machining program creating device 70 (see FIG. 8), a unit machining distance and the amount of tilt of the wire electrode are set in advance. By only doing this, the amount of tilt can be automatically changed for each unit machining distance to create the machining program, as in the case of the above-described machining program example. According to the above machining program example, the unit machining distance and the wire electrode tilt amount are 0.01 mm and 0.1 mm, respectively.

Further, this machining method is also effective for the machining of helical gears. FIGS. 5A and 5B are diagrams illustrating how a helical gear is machined by wire electric discharge machining.

If the wire electrode 4 is connected at circumferential parts (with radius R) of the upper and lower surfaces of a columnar workpiece as a material of the helical gear, an indentation is excessively produced in the central part (with radius r) of the workpiece by machining. In the case where the helical gear is machined by wire electric discharge machining in this manner, the wire electrode is extended straight, so that the central part of the thickness of the workpiece is inevitably thinned. However, the reduction of the thickness can be reduced by the method of the present invention.

Machining conditions are contained in many of program creating devices and programming software for wire electric discharge machining. If the unit machining distance and the wire electrode tilt amount are previously added to the machining conditions, the same machining program as aforesaid can be created by using the unit machining distance and the wire electrode tilt amount among the conditions selected for the machining program creation.

In FIGS. 2 and 3, the program plane 40 is set in the central part 34 of the workpiece 3 with respect to the thickness. However, the set position of the program plane 40 is not limited to the central part 34 of the workpiece 3. FIG. 4 shows an example in which the program plane 40 is set in a position (not always coincident with the central part of the workpiece 3 with respect to the thickness) where an indentation is produced conspicuously on the workpiece 3 by machining. The irregularity in the amount of machining with respect to the thickness of the workpiece 3 can be reduced by setting the program plane 40 in this position. In the machining program, in this case, a desired result can be obtained if the X- and V-axes are commanded in the most constricted position and on the workpiece lower surface 32, respectively.

The following is a description of a wire electric discharge machining method capable of reducing streaks that are produced during finish machining with low electric discharge energy.

If strong electric discharge occurs at a single point on the wire electrode 4 during the finish machining with low electric discharge energy, as previously described with reference to FIG. 13, the single point (discharge point) moves from the top to bottom of the workpiece 3 as the wire electrode 4 runs. Thereupon, streaks 37 are produced on the surface of the workpiece 3.

In order to suppress the production of the streaks 37, according to the machining method of the present invention, therefore, the tilt of the wire electrode 4 relative to the running direction (machining direction) of the wire electrode 4 is continuously changed so that the streaks in a uniform direction are crossed at a discharge point 36. Thus, the streaks 37 are made to cancel one another, thereby reducing production of fine streaks.

FIGS. 6A and 6B are diagrams illustrating how the wire electrode 4 is continuously alternately tilted forward and backward relative to the machining direction of the workpiece 3 as the workpiece 3 is machined. The program plane 40 is set in the central part of the workpiece 3 with respect to its thickness. The workpiece 3 is machined in the "machining direction" shown in FIG. 1.

FIG. 6A shows a state in which the upper wire guide 11 is moved relative to the workpiece upper surface 31 to the right of the drawing plane and the lower wire guide 12 is moved relative to the workpiece lower surface 32 to the left of the drawing plane, whereby the wire electrode 4 is tilted forward relative to the machining direction. On the other hand, FIG. 6B shows a state in which the upper wire guide 11 is moved relative to the workpiece upper surface 31 to the left of the drawing plane and the lower wire guide 12 is moved relative to the workpiece lower surface 32 to the right of the drawing plane, whereby the wire electrode 4 is tilted backward relative to the machining direction. Then, electric discharge machining of the workpiece 3 is executed by continuously alternately tilting the wire electrode 4 between the states shown in FIGS. 6A and 6B relative to the machining direction. Thus, the direction of movement of the discharge point is not fixed, so that production of streaks on a machined surface of the workpiece 3 can be reduced.

Instead of tilting the wire electrode 4 by moving the upper and lower wire guides 11 and 12, according to the wire electric discharge machine shown in FIG. 1, the X-axis servomotor 5 may be driven to move the workpiece table 1 in accordance with the machining program so that the wire electrode 4 moves relative to the workpiece 3 in the illustrated machining direction. Further, the U-axis servomotor 8 may be driven to tilt the wire electrode 4 right and left relative to the machining direction.

The degree to which the wire electrode 4 is tilted relative to the workpiece 3 can be set in accordance with the machining program based on the height of the workpiece upper surface 31 above the program plane 40.

The following is a description of an example of the machining program by which the wire electrode 4 shown in FIGS. 6A and 6B is alternately tilted right and left as the workpiece 3 is machined.
G01X10.
X10.01 U0.1
X10.02 U-0.1
X10.03 U0.1
X10.04 U-0.1

In the above program example:
The first line indicates that the current position of the wire electrode 4 moves to the position X10-mm. G01 represents the linear interpolation command.

The second line indicates that the wire electrode 4 is moved to the position X10.01-mm as its upper side is positively displaced 0.1 mm relative to the X-axis.

The third line indicates that the wire electrode 4 is moved to the position X10.02-mm as its upper side is negatively displaced 0.1 mm relative to the X-axis.

The fourth line indicates that the wire electrode 4 is moved to the position X10.03-mm as its upper side is positively displaced 0.1 mm relative to the X-axis.

The fifth line indicates that the wire electrode 4 is moved to the position X10.04-mm as its upper side is negatively displaced 0.1 mm relative to the X-axis.

In the machining program example described above, reference symbol X denotes a commanded central position on the workpiece 3 with respect to the thickness thereof, as the program plane. Reference symbol U denotes a commanded amount of tilt as an amount of deviation on an auxiliary plane. In this case, reference symbol U denotes a commanded amount of tilt of the wire electrode 4 on the workpiece upper surface 31, the top part of the workpiece 3 with respect to the thickness thereof. In the wire electric discharge machining program creating device 70 (see FIG. 8), the unit machining distance and the amount of tilt of the wire electrode are set in advance. By only doing this, the amount of tilt can be automatically changed for each unit machining distance to create the machining program, as in the case of the above-described machining program example. According to the above machining program example, the unit machining distance and the wire electrode tilt amount are 0.01 mm and 0.1 mm, respectively.

In a case, the wire electrode 4 is tilted right and left within a plane perpendicular to the machining direction or forward and backward relative to the machining direction. In order to prevent deformation of a corner of a machining path and portions (corner portions) ahead of and behind the corner, in this case, the operation for continuously alternately tilting the wire electrode 4 right and left or forward and backward may be prevented in a region ranging from a position a predetermined distance (L) short of the corner to a position the distance (L) ahead of the corner.

FIG. 7 is a diagram illustrating how the corner portions of the workpiece 3 are machined without alternately tilting the wire electrode right and left or forward and backward relative to the machining direction of the workpiece 3 in intervals for the predetermined distance.

If the wire electrode 4 reaches a spot 50 the predetermined distance (L) short of a corner C, its tilting operation is stopped. The specified tilting operation is resumed at a spot 51 the predetermined distance (L) ahead of the corner C. Deformation of the corner portions can be prevented by thus controlling the operation of the wire electrode 4.

The wire electric discharge machining program creating device will now be described with reference to FIG. 8.

The program creating device 70 is formed of a conventional information processing device, such as a personal computer, numerical controller, etc. The program creating device 70 comprises a CPU 71, memory 72, display device 73, input means 74, and interface 75. The memory 72 comprises a ROM, RAM, etc., which are connected to the CPU 71 by a bus 76. The display device 73 is formed of a liquid-crystal display. The input means 74 includes a keyboard or the like through which data and commands are input.

First, an operator operates the input means 74 to input the unit machining distance and the wire electrode tilt amount and then input required data for the creation of the machining program including a machining start position, machining end position, machining order, etc. Thereupon, the CPU 71 starts a program for creating the wire electric discharge machining program according to the present invention and creates the machining program based on the given data. The program for creating the wire electric discharge machining program is stored in a computer-readable recording medium stored. Thus, the wire electric discharge machining program can be created by installing the program for machining program creation from the recording medium into a computer or the like and inputting required data.

## Claims

1. A wire electric discharge machining method, a unit machining distance and a desired amount of tilt of a wire electrode (4) having been set in advance, the method comprising:
performing machining while continuously tilting the wire electrode (4) alternately right and left within a plane perpendicular to a machining direction, whereby the direction of tilt is changed for each said unit machining distance and the amount of tilt at each said unit machining distance corresponds to said desired amount of tilt; and
preventing said tilting in a region ranging from a position (50) which is at a predetermined distance short of a corner of the machining path up to a position (51) which is at the predetermined distance past said corner.

2. A wire electric discharge machine comprising a wire electrode (4) and means configured to carry out the method of claim 1.

3. A machining program creating device configured to create a machining program which, when executed in a wire electric discharge machine comprising a wire electrode (4), causes the wire electric discharge machine to carry out the method of claim 1.

4. A computer program configured to create a machining program which, when executed in a wire electric discharge machine comprising a wire electrode (4), causes the wire electric discharge machine to carry out the method of claim 1.

5. A computer-readable recording medium in which the computer program of claim 4 is stored.

## Patentansprüche

1. Elektrisches Drahterodierverfahren, bei dem ein Einheitsbearbeitungsabstand und ein gewünschter Kippbetrag einer Drahtelektrode (4) im Voraus eingestellt wurden, wobei das Verfahren folgende Schritte umfasst:
- Ausführen einer Bearbeitung, während die Drahtelektrode (4) ständig abwechselnd innerhalb einer Ebene, die zu einer Bearbeitungsrichtung rechtwinklig ist, nach rechts und links gekippt wird, wodurch die Kipprichtung für jeden Einheitsbearbeitungsabstand geändert wird und der Kippbetrag in jedem Einheitsbearbeitungsabstand dem gewünschten Kippbetrag entspricht; und
- Verhindern des Kippens in einer Region, die von einer Position (50), die sich in einem vorbestimmten Abstand vor einer Ecke der Bearbeitungsbahn befindet, bis zu einer Position (51), die sich in dem vorbestimmten Abstand nach der Ecke befindet, reicht.

2. Drahtschneide-Funkenerosionsmaschine, umfassend eine Drahtelektrode (4) und Mittel, die konfiguriert sind, um das Verfahren nach Anspruch 1 auszuführen.

3. Vorrichtung zum Erstellen eines Bearbeitungsprogramms, die konfiguriert ist, um ein Bearbeitungsprogramm zu erstellen, das bewirkt, wenn es in einer Drahtschneide-Funkenerosionsmaschine, die eine Drahtelektrode (4) umfasst, ausgeführt wird, dass die Drahtschneide-Funkenerosionsmaschine das Verfahren nach Anspruch 1 ausführt.

4. Computerprogramm, das konfiguriert ist, um ein Bearbeitungsprogramm zu erstellen, das bewirkt, wenn es in einer Drahtschneide-Funkenerosionsmaschine, die eine Drahtelektrode (4) umfasst, ausgeführt wird, dass die Drahtschneide-Funkenerosionsmaschine das Verfahren nach Anspruch 1 ausführt.

5. Computerlesbares Aufzeichnungsmedium, auf dem das Computerprogramm nach Anspruch 4 gespeichert ist.

## Revendications

1. Procédé d'usinage par décharge électrique à fil, une distance d'usinage unitaire et un degré d'inclinaison souhaité d'un fil-électrode (4) ayant été établis à l'avance, le procédé comprenant les étapes consistant à
effectuer un usinage tout en continuant d'incliner en continu le fil-électrode (4) alternativement à droite et à gauche dans un plan perpendiculaire à une direction d'usinage, de sorte que la direction d'inclinaison est modifiée pour chaque distance d'usinage unitaire et la quantité d'inclinaison à chaque distance d'usinage unitaire correspond à ladite quantité d'inclinaison souhaitée ; et
empêcher ladite inclinaison dans une zone allant d'une position (50) qui est à une distance prédéterminée avant un coin du trajet d'usinage jusqu'à une position (51) qui se trouve à la distance prédéterminée au-delà dudit coin.

2. Machine à décharge électrique à fil comprenant un fil-électrode (4) et des moyens configurés pour mettre en oeuvre le procédé de la revendication 1.

3. Dispositif de création de programme d'usinage configuré pour créer un programme d'usinage qui, lorsqu'il est exécuté dans une machine à décharge électrique à fil comprenant un fil-électrode (4), amène la machine à décharge électrique à fil à mettre en oeuvre le procédé de la revendication 1.

4. Programme informatique configuré pour créer un programme d'usinage qui, lorsqu'il est exécuté dans une machine à décharge électrique à fil comprenant un fil-électrode (4), amène la machine à décharge électrique à fil à mettre en oeuvre le procédé de la revendication 1.

5. Support d'enregistrement lisible par ordinateur dans lequel le programme informatique de la revendication 4 est stocké.
